Europäisches Patentamt

(19) European Patent Office

Office européen des brevets

(11) Publication number: **0 140 223**
**A2**

# (12) EUROPEAN PATENT APPLICATION

(21) Application number: **84112066.0**

(22) Date of filing: **09.10.84**

(51) Int. Cl.⁴: **C 08 J 3/02**

(30) Priority: **02.11.83 US 548101**

(43) Date of publication of application:
**08.05.85 Bulletin 85/19**

(84) Designated Contracting States:
**DE FR GB IT**

(71) Applicant: **ALLIED CORPORATION**
**Columbia Road and Park Avenue P.O. Box 2245R (Law Dept.)**
**Morristown New Jersey 07960(US)**

(72) Inventor: **Becker, Larry W. C/O Allied Corporation**
**P.O. Box 2245R**
**Morristown, NJ 07960(US)**

(72) Inventor: **Shultes, Benjamin, III C/O Allied Corporation**
**P.O. Box 2245R**
**Morristown, NJ 07960(US)**

(74) Representative: **Baillie, Iain Cameron et al,**
**c/o Ladas & Parry Isartorplatz 5**
**D-8000 München 2(DE)**

(54) **Stable water-in-oil emulsions.**

(57) This invention relates to a stable water-in-oil emulsion which contains a water soluble vinyl addition of polymers and copolymers. One or more water soluble water-in-oil emulsifying agents containing a surfactant and system which comprises a mixture of one or more hydrophillic surfactants.

EP 0 140 223 A2

0140223

DESCRIPTION

STABLE WATER-IN-OIL EMULSIONS

BACKGROUND

1. Field of the Invention

This invention relates to stable water-in-oil emulsions. More particularly, this invention relates to such emulsions which contain a unique inverting surfactant system such that said emulsions are stable and invert upon addition to water.

2. Prior Art

Water-in-oil emulsions of water-soluble vinyl addition polymers prepared from water-soluble ethylenically unsaturated monomers have become increasingly important in many areas. These areas include the use of these polymers in the treatment of municipal and industrial wastes, papermaking, as additives to control drift, clarification of aqueous solutions, stabilizers for drilling muds, in the secondary recovery of petroleum by water flooding and in many other applications. Typically these polymers are made from water-soluble ethylenically unsaturated monomers which include acrylamide, acrylic acid, methacrylic acid, dimethylaminoethylmethacrylate and methylchloride and dimethyl sulfate quaternary derivatives thereof, dimethyldiallylammonium chloride and other commercially available water soluble vinyl monomers.

For example, Vanderhoff, et. al. U.S. Pat. 3,284,393 discloses a process for the preparation of water-in-oil emulsions of these polymers. While Vanderhoof does form an emulsion of these polymers, the emulsion is not stable and Vanderhoff must precipitate is polymers as a solid in order to use his process economically.

These Vanderhoff water-soluble polymer systems suffer from several disadvantages. For example, the requirement that the polymers are precipitated as a solid creates additional processing problems. Although these polymers are most often available commercially as powders or as a finely-divided solid, they are most frequently utilized as aqueous solutions. This necessitates that the solid polymer material be dissolved in water. Although the various polymers are more or less soluble in water, difficulty is often experienced in preparing aqueous polymer solutions because of their slow dissolution and because the solid polymer is not readily dispersible in water. Furthermore, dispersion of solid polymers in water is hindered by their tendency to clump or remain as agglomerates on contact with water. Lumps of solid polymer immediately form by the encapsulation of undissolved solids in an outer coating of water-wet polymer retards the penetration of additional water into the agglomerate. Although many of these lumps are eventually dissolved by continued agitation, it is frequently impractical to agitate the solution for a sufficiently long period to obtain complete dissolution.

Several of the disadvantages of the Vanderhoff, et al. patent were obviated by Anderson, et. at. U.S. Patent 3,624,019. Anderson, et. al. discloses a method of preparing emulsions of finely divided water soluble polymers prepared from ethylenically unsaturated vinyl addition monomers. The advantage of the Anderson, et al. patent is that the polymer is not isolated as in the solid form. Rather, the emulsions include a surfactant which causes them to readily invert into an aqueous solution of the polymer on addition to water. While Anderson, et. al. did provide an advancement in the art, these Anderson et. al. emulsions have not been as stable as industrial users would like to see, in that they often separate into oil and aqueous phases after only a short time. It has been disclosed in the prior art that a part of this instability results from low inverting capabilities of known surfactant systems which mandate that large amounts of the surfactant must be added to the system to provide for inversion of the emulsion within a reasonable period of time after addition to water.

## SUMMARY OF THE INVENTION

One aspect of this invention relates to a novel surfactant system comprised of one or more water soluble polyethylene glycols and one or more compatible surfactants. This invention also relates to an improved water-in-oil emulsion of the type which contains from about 5 to about 90 weight percent of one or more finely divided water soluble vinyl addition polymers or copolymers and one or more water soluble water-in-oil emulsifying agents, and said oil being a hydrocarbon liquid, said emulsion containing one or more inverting surfactants capable of inverting said emulsion on addition to water whereby the water-soluble vinyl addition polymer is released into the water as a solution, said improvement comprising a surfactant system which comprises a mixture of one or more water-soluble polyethylene glycols and one or more compatible surfactants. Yet another aspect of this invention relates an improved method of releasing a polymer from water-in-oil emulsion into water as a solution.

## DETAILED DESCRIPTION OF THE INVENTION

The stable water-in-oil emulsion of this invention comprises four ingredients:

1. an aqueous phase;
2. an inert hydrophobic liquid;
3. one or more water-in-oil emulsify agents; and
4. an inverting surfactant system.

The polymer containing emulsion of this invention is comprised of an aqueous phase ranging from about 5 to about 95% by weight of the emulsion. The aqueous phase is defined as the sum of polymer or copolymer and the water present in the composition. The preferred amount of the aqueous phase is from about 50 to about 90% by weight of the emulsion, and in the particularly preferred embodiments the amount of the aqueous phase is from about 55 to about 80% on the same basis. Amongst these particularly preferred embodiments most preferred are those embodiments in which the amount of the aqueous phase is from about 55 to about 75% by weight of the emulsion.

The emulsion of the present invention will have a polymer concentration of from about 15 to about 70% by weight of the emulsion. A preferred range is between about 20 and about 40 % by weight of the emulsion, and a particularly preferred range is from about 25 to about 40% by weight of the emulsion. Amongst these particularly preferred embodiments, most preferred are those embodiments of the invention in which the polymer concentration is from about 25 to about 32% by weight of the emulsion.

Polymers which are useful in the conduct of this invention are well-known to the art, and have been described in numerous publications and patents. Polymers which can be used in this invention include nonionic, cationic and anionic polymers. Illustrative of useful nonionic polymers are polyacrylamide, polymethacrylamide and the like. Useful cationic polymers include copolymers of acrylamide and methacrylamide, and such cationic monomers as dimethyldiallylammonium chloride, quaternary derivatives of dimethylaminoethylmethacrylate and acrylate as for example the quaternized derivatives of methyl chloride and dimethyl sulfate, and the homopolymers of such cationic monomers. Exemplary of useful anionic polymers are copolymers of acrylic acid and acrylamide, copolymers of acrylamide and 2-acrylamido-2-methyl-propanesulfonic acid (AMPS) and the like.

Also useful are copolymers of acrylamide with other vinyl monomers such as maleic anhydride, acrylonitrile, styrene and the like. Other water-soluble vinyl polymers which can be used in the emulsion of this invention are described in detail in the following U.S. Patent Nos. 3,418,237, 3,259,570 and 3,171,805. Gums are well-known water-soluble polymers which can also be used in the conduct of this invention and are described in vol. 10 of the Encyclopedia of Chemical Technology, 2nd edition, Interscience Publishers, 1966.

The polymers most commonly used in many industrial applications are acrylamide polymers which include polyacrylamide and its water-soluble copolymeric derivatives, such as, for instance acrylamide/acrylic acid copolymer and acrylamide/acrylic acid salt copolymer which contain from about 95 to about 5% by weight of acrylamide based on the total weight of the copolymer; acrylamide/2-acrylamido-2-methylpropanesulfonic acid copolymers; and copolymers of acrylamide and the methyl chloride or dimethyl sulfate quaternary derivatives of dimethylaminoethylmethacrylate which contain from about 2 to about 95 mole % of the quarternary monomer. It is preferred in the practice of this invention to use acrylamide polymers which are water-soluble and which contain at least about 5% by weight of acrylamide based on the total weight of the polymer. In the particularly preferred embodiments of this invention, the polymer is polyacrylamide or a copolymer of acrylamide and acrylic acid in which the acrylic acid content is not greater than about 5% by weight of the polymer.

The molecular weight of the polymers described above for use in the practice of this invention may vary over a wide range, for example from about 10,000 to about 25,000,000. The invention, however, finds its greatest usefulness in preparing aqueous solutions or dispersions of these polymers and, in particular, acrylamide polymers whose molecular weight are in excess of 1,000,000. Polymers having higher molecular weights are more difficult to dissolve in water and tend to form extremely viscous solutions at relatively low concentrations. Also, the polymers may be produced by any known methods of conducting polymerization reactions. Thus, solution, suspension or emulsion polymerization techniques may be used.

The oils used in preparing the emulsion of this invention may be selected from a large group of organic liquids which include liquid hydrocarbons and substituted liquid hycrocarbons. A preferred group of organic liquids are the hydrocarbon liquids which include both aromatic and aliphatic compounds. Representative of such hydrocarbon liquids are benzene, xylene, toluene, mineral oils, kerosenes, naphthas and in certain instances petrolatums.

The aliphatic and aromatic hydrocarbon oils which are useful in the practice of this invention will usually comprise from about 5 to about 95% by weight of the emulsion. In the preferred embodiments of the invention, the amount of such oils is from about 10 to about 50% by weight of said emulsion, and in the particularly preferred embodiments is from about 20 to about 45 % by weight of said emulsion. Amongst these particularly preferred embodiments, most preferred are those embodiments in which the amount of oil is from about 25 to about 35% by weight of the emulsion.

The water-in-oil emulsifying agents for use in the emulsion of this invention are not critical, and emulsifying agents known to those of skill in the art can be employed. Useful emulsifiers include various ethoxylated sorbitan derivatives of high molecular weight fatty acids, as for example ethoxylated sorbitan oleates and stearates. Preferred for use in the practice of this invention are emulsifying agents or mixtures thereof having low HLB ratios of less than about 9, and preferably from about 4.5 to about 8. Such low HLB materials are well documented in the literature and are summarized in the Atlas HLB Surfactant Selector. Although these emulsifiers are preferred for use in this invention and produce good water-in-oil emulsions, other surfactants may be used as long as they are capable of producing these emulsions.

The amount of emulsifying agent required to provide a stable emulsion will have to be determined by routine experimentation. As a general rule it may be said that the amount of oil-soluble emulsifier may range from about 0.1 to about 30 percent by weight based on the total weight of the oil. In the preferred embodiments of the invention the weight percent of emulsifier will vary from about 1 to about 10 weight percent based on the total weight of the oil, and in the particularly preferred embodiments will vary from about 2 to about 8 weight percent on the aforementioned basis. Amongst these particularly preferred embodiments, most preferred are those embodiments in which the weight percent of emulsifying agent varies from about 2 to about 6 weight percent on the aforementioned basis.

The emulsion of this includes an effective amount of a novel inverting surfactant system. In the general, the surfactant system comprises a mixture of one or more water soluble polyethylene glycols and one or more surfactants. In the preferred embodiments of this invention, the emulsion will include from about 0.2 to about 5 weight percent of a surfactant system based on the total weight of the emulsion which system contains from about 5 to about 75 weight percent polyethylene glycol and from about 25 to about 95 weight percent of the one or more surfactants based on the total weight of the system. In the particularly preferred embodiments of the invention, the emulsion will include from about 0.5 to about 3 weight percent of the surfactant system based on the total weight of the emulsion, which system contains from about 5 to about 60 weight percent of the polyethylene glycol and from about 40 to about 95 weight percent of the one or more surfactants based on the total weight of the system. Amongst these particularly preferred embodiments, most preferred are those embodiments which contain from about 0.75 to about 2 weight percent of the novel surfactant system based on the total weight of the emulsion, which system contains from about 5 to about 50 weight percent of the polyethylene glycol and from about 50 to about 95 weight percent of the one or more surfactants based on the total weight of the system.

Any water soluble polyethylene glycol can be used in the practice of the invention. Usually, the polyethylene glycol will have an average molecular weight of from about 100 to about 6000, and in the particularly preferred embodiments will have an average molecular weight of from about 200 to about 2000. Amongst these particularly preferred embodiments, most preferred are those embodiments in which the average molecular weight in from about 200 to about 600.

Any anionic, cationic, or nonionic surface active material can be used as the surfactant component of the inverting detergent system. Examples of suitable anionic surfactants are alkali metal, ammonium and amine soaps; the fatty acid part of such soaps contains preferably at least 16 carbon atoms because soaps based on lauric and myristic acids have a great tendency to develop abundant foam. Other examples of suitable anionic surfactants are alkali metal salts of alkyl-aryl sulfonic acids, sodium dialkyl sulfosuccinate, sulfated or sulfonated oil, such as sulfated castor oil; sulfonated tallow, and alkali salts of short chain petroleum sulfonic acids.

Examples of suitable cationic surfactants are salts of long-chain primary, secondary, or tertiary amines, such as oleylamine acetate, cetylamine acetate, didodecylamine lactate, the acetate of aminoethyl stearamide, dilauroyl triethylene tetramine diacetate, 1-aminoethyl-2-heptadecenyl imidazoline acetate; and quaternary salts, such as cetylpyridinium bromide, hexadecyl ethyl morpholinium chloride, and diethyl didodecyl ammonium chloride.

Examples of suitable nonionic surfactants are condensation products of higher fatty alcohol with ethylene oxide, such as the reaction product of oleyl alcohol with 10 ethylene oxide units; condensation products of alkyl-phenols with ethylene oxide, such as the reaction product of isooctylphenol with 12 ethylene oxide units;

condensation products of higher fatty acid amides with five, ore more, ethylene oxide units; polyethylene glycol esters of long chain fatty acids, such as tetraethylene glycol monopalitate, hexaethyleneglycol monolaurate, nonaethyleneglycol monostearate, nonaethyleneglycol dioleate, tricosaethyleneglycol monoarachidate, tricosaethylene glycol monobehenate, tricosaethyleneglycol dibehenate, polyhydric alcohol partial higher fatty acid esters such as sorbitan tristearate, ethylene oxide condensation products of polyhydric alcohol partial higher fatty ester, and their inner anhydrides (mannitolan-hydride, called Mannitan, and sorbitol-anhydride, called Sorbitan), such as glycerol monopalmitate reacted with 10 molecules of ethylene oxide, pentaerythritolmonooleate reacted with 12 molecules of ethylene oxide, sorbitan monostearate reacted with 10 to 15 molecules of ethylene oxide; long chain polyglycols in which one hydroxyl group is esterified with a higher fatty acid and the other hydroxyl group is etherified with a low molecular alcohol, such as methoxypolyethylene glycol 550 monstearate (550 meaning the average molecular weight of the polyglycol ether). A combination of two or more of these surfactants may be used, e.g. a cationic may be blended with a nonionic or an anionic with a nonionic. Preferred hydrophilic surfactants for use in the practice of this invention include, but are not limited to: polyoxyethylene alkyl phenol, polyoxyethylene (10 mole) cetyl ether, polyoxyethylene alkylaryl ether, polyoxyethylene monolaurate, polyoxyethylene vegetable oil, polyoxyethylene sorbitan monolaurate, polyoxyethylene esters or mixed fatty and resin acids, polyoxyethylene sorbitol lanolin derivative, polyoxyethylene (12 mole) tridecyl ether, polyoxyethylene sorbitan esters of mixed fatted and resin acids, polyoxyethylene sorbitan monostearate, polyoxyethylene sorbitan monooleate, polyoxyethylene monostearate, polyoxyethylene (20 mole) stearyl ether, polyoxyethylene (20 mole) oleyl ether, polyoxyethylene (15 mole) tridecyl ether, polyoxyethylene fatty alcohol, poloxyethylene alkyl amine, polyoxyethylene glycol mono-palmitate, polyoxyethylene sorbitan monopalmitate, poly-oxyethylene (20 mole) cetyl ether, polyoxyethylene oxypropylene stearate, polyoxyethylene lauryl ether, polyoxyethylene lanolin derivative, sodium oleate, quaternary ammonium derivative potassium oleate, N-cetyl N-ethyl morpholinium ethosulfate, pure sodium lauryl sulfate, ethoxylated nonyl phenols, ethoxylated nonyl phenol formaldehyde resin, dioctyl esters of sodium sulfosuccinate, octyl phenol polyethoxy ethanol and the like.

Other preferred surfactants that may be employed include the soaps such as sodium and potassium myristate, laurate, palmitate, oleate, stearate, resinate, and hydroabietate, the alkali metal alkyl or alkylene sulfates, such as sodium lauryl sulfate, potassium stearyl sulfate, the alkali metal alkyl of alkylene sulfonates, such as sodium lauryl sulfonate, potassium stearyl sulfonate, and sodium cetyl sulfonate, sulfonated mineral oil, as well as the ammonium salts thereof; and salts of higher means like lauryl amine hydrochloride, and stearyl amine hydrobromide.

In certain embodiments of this invention, the inverting surfactant system may be directly added to the polymer-containing emulsion; thereby rendering it self-inverting upon contact with water. These products, while capable of being used in certain systems, must be carefully formulated since the surfactants may tend to interact with the emulsifier or the emulsion and destroy it prior to its being used.

In other embodiments of the invention, this invention, the novel inverting surfactant system can be added to the water rather than to the emulsion in which case the polymer containing emulsion will invert on contact therewith. In these embodiments, the amount of novel inverting surfactant system added to water can vary widely, however, such amount is usually at least about 0.25 weight percent of the system by weight of emulsion added to the water. In the preferred embodiments of the invention, the amount of the surfactant system may range from about 0.3 to about 10 weight percent by weight of emulsion, and in the particularly preferred embodiments may range from about 0.4 to about 5 weight percent on the aforementioned basis. Amongst these particularly preferred embodiments, most preferred are those embodiments in which the amount of the surfactant system varies from about 0.5 to about 2 weight percent by weight of emulsion.

In one procedure of preparing the novel emulsion of this invention, the water-soluble vinyl addition polymers or the gums are dispersed into the water-in-oil emulsion containing one or more suitable emulsifying agents. The polymers as produced by most manufacturing processes are in the form of powders or lumplike agglomerates of varying particle size. It is desirable that the particles, before being placed into the emulsion, be comminuted by grinding, abrading or the like so that their average particle size is less than about 5 millimeters and preferably is within the range of from about 1 to about 5 microns. After the powders have been comminuted, they can be dispersed into the water-in-oil emulsion by means of agitation provide by such devices as stirrers, shakers and the like after which the desired amount of the novel inverting surfactant system is added.

It also is possible to prepare the polymer-containing emulsion of the water-soluble vinyl addition polymers directly from the vinyl monomers from which these polymers are synthesized. Such polymer-containing emulsion may be synthesized by using the water-in-oil emulsion polymerization technique set forth in U.S. Patent No. 3,284,393. The teachings of this patent comprise forming a water-in-oil emulsion of water-soluble ethylenically unsaturated monomers. The emulsion is formed by utilizing a water-in-oil emulsifying agent. To this

-12-

monomer is added a free radical-type polymerization catalyst and then heat is applied under free redical-forming conditions to form water-soluble polymer lattices. The polymeric lattices produced by this patent are relatively unstable and frequently must be treated with additional emulsifiers to render the products stable. After formation of the emulsion, an effective amount of the novel inverting surfactant system is added.

The following specific examples are presented to more particularly illustrate the invention.

## EXAMPLE I
### Preparation of a Non-ionic Emulsion

An oil phase is prepared by mixing 150g of a low aromatic kerosene with 12.5g of an emulsifier blend of a sorbitan monoleate, ethoxylated 12-hydroxy stearic and sorbitan trioleate having a HLB ratio of 5.0. The resulting oil phase is emulsified with a Silverson mixer while the acrylamide solution (140g of acrylamide in 168g water which contains a copper chelant which is manufactured and marketed by Dow Chemical Co. under the tradename Versenex 80 to complex the copper ions) is added. The emulsification process is continued until 90% of the droplets are between 0.5 and 3) in size. The resulting water-in-oil emulsion is charged into a 1P glass jacketed resin kettle equipped with a stirrer, nitrogen sparger, and thermometer. The emulsion is sparged with nitrogen for 0.5 hours to remove oxygen. Water at $40\pm1.0°C$ is circulated through the reactor jacket to maintain the reaction temperature. The system is designed to allow circulation of cooling water in the event of an exotherm. A polymerization catalyst, 2,2'-azobis (2,4-dimethyl valeronitrile, manufactured and marketed by DuPont under the tradename Vazo® 52 (0.03g in 1 ml toluene) is added and the polymerization is continued until less than 1% monomer is present. Six grams of a surfactant mixture of ethoxylated nonylphenol surfactant manufactured and sold by Rohm Haas Co. under the

-13-

tradename Triton-N-101 (90%) and a polyethylene glycol having an average molecular weight of 300 manufactured and sold by Union Carbide under the tradename Pluracol E-300 (10%) is slowly added dropwise to complete the preparation. The resulting polymer has a Brookfield viscosity of 4.4 cps (LVT=UL) 60 rpm; 0.1% polymer in iM sodium nitrate.

## EXAMPLE II
### Preparation of an Anionic Emulsion

An anionic emulsion with 8 mole % charge was prepared using the general procedure described in Example II. Kerosene (150g) is mixed with 15.0g of the emulsifier blend of Example I in which the HLB ratio has been adjusted to 7.0. An aqueous acrylamide mixture (291g; 50% water) is mixed with 49.0g of 25.8% aqueous sodium acrylate solution and 25.0g of water. The resulting emulsion is polymerized to low residual monomer using Vazo® 52 as the polymerization catalyst. Five grams of inverting surfactant system (90% Triton N-101 and 10% Pluracol E-300 is slowly added to complete the synthesis. The product exhibits a Brookfield Viscosity of 2.9 cps at 25°C (LVT-UL, 60 rpm); 0.1% polymer in 1M sodium nitrate.

## EXAMPLE III
### Preparation of a Cationic Emulsion

A cationic emulsion with 5 mole% charge was prepared by the general method described in Example 1. Kerosene (150g) is mixed with 12.5g of the emulsifier blend of Example I in which the HLB ratio has been adjusted to 6.0. An aqueous 50% acrylamide solution (266.1g) and an aqueous 75% dimethylaminoethylmethacrylatemethyl chloride quaternary ammonium salt (27.3g) are mixed with 28.1g of distilled water. The resulting water-in-oil emulsion is polymerized to low residual monomers using Vazo®-52 (0.03g in 1 mL of toluene) as the polymerization catalyst. Six grams of a mixture of 90% Triton N-101 and 10% Pluracol E-300 polyethylene glycol are slowly added to the emulsion. The polymer emulsion exhibited a Brookfield viscosity of 3.9 cps at 25°C (LVT-UL 60 rpm); 0.1% polymer in 1M sodium nitrate.

## EXAMPLE IV
### Inversion Emulsion Stability Testing of an
### Emulsion Containing Non-ionic Polymer

A series of tests were conducted to evalute the stability of the emulsion of this invention in which the polymer is polyacrylamide, and to compare same with the stability of an emulsion incorporating prior art inverting surfactants systems. The test procedure employed in these evaluations are as follows:

Inverse Emulsions Stability Test Procedure:

Into separate 25 mL graduated mixing cylinder is poured 20 mL of several emulsions prepared in accordance with the general procedure of Example I. Cash cylinder is then placed into a 50°C oven. The emulsion is examined at appropriate intervals and phase separation is measured. The depth of the oil layer at the top of the sample is noted and recorded in mL, and the depth of the cream layer at the bottom of the cylinder is also noted and recorded in mL. The cream layer will usually adhere to the cylinder bottom when the cylinder is tipped and is most easily observed when the cylinder is tipped upside down.

The results of the evaluation of the emulsion of this invention are set forth in the following Table I.

## TABLE I

### Results of The Evaluation of Emulsion of this Invention Containing Polyacrylamide

| | | Emulsion | | | | Thermal Stability | |
| | | Inverting Detergent System | | | | | |
| Emulson No. | Wgt % Polymer | Wgt % Polyethylene Glycol | Wgt % Triton N-101 | Wgt % System | Days | ml of Oil | ml of Cream |
|---|---|---|---|---|---|---|---|
| 1 | 29 | 0 | 100 | 2.5 | 35 | 4 | 2 |
| 2 | 29.25 | 5 PEG 200[1] | 95 | 1.67 | 34 | 1 | 3 |
| 3 | 29.25 | 10 PEG 200 | 90 | 1.67 | 34 | 1 | 3 |
| 4 | 28.9 | 25 PEG 200 | 75 | 2.88 | 32 | 1/4 | 1/2 |
| 5 | 29.25 | 50 PEG 200 | 50 | 1.67 | 34 | 1/2 | 0 |
| 6 | 29 | 0 | 100 | 2.5 | 35 | 4 | 2 |
| 7 | 29.38 | 10 PEG 300[2] | 90 | 1.67 | 34 | 1/2 | trace |
| 8 | 29.38 | 5 PEG 300 | 95 | 1.67 | 31 | 1/2 | trace |
| 9 | 29.25 | 25 PEG 300 | 75 | 1.67 | 31 | 1/2 | trace |
| 10 | 29.25 | 5 PEG 300 | 50 | 1.67 | 31 | 1/2 | 0 |
| 11 | 24.82 | 0 | 100 | 1.67 | --- | G[5] | G |
| 12 | 29.38 | 5 PEG 400[3] | 95 | 1.26 | 31 | 1/2 | 10 |
| 13 | 29.5 | 25 PEg 400 | 75 | 2.44 | 28 | 1/4 | 1/2 |
| 14 | 29.38 | 5 PEG 600[4] | 95 | 1.26 | 37 | 1/2 | trace |
| 15 | 29.38 | 10 PEG 600 | 75 | 1.26 | 37 | 3/4 | trace |
| 16 | 29.38 | 25 PEG 600 | 75 | 1.26 | 37 | 1/2 | trace |
| 17 | 29.25 | 50 PEG 600 | 50 | 1.67 | 37 | 1/2 | trace |
| 18 | 28.54 | 100 PEG 200 | 0 | 4.08 | D[6] | D | D |
| 19 | 28.54 | 100 PEG 300 | 0 | 4.08 | D | D | D |
| 20 | 28.54 | 100 PEG 400 | 0 | 4.08 | 37 | 1/2 | trace |
| 21 | 28.54 | 100 PEG 600 | 0 | 4.08 | 37 | 1/2 | trace |

1 "PEG 200" means polyethylene glycol having an average molecular weight of 200.

2 "PEG 300" means polyethylene glycol having an average molecular weight of 300.

3 "PEG 400" means polyethylene glycol having an average molecular weight of 400.

4 "PEG 600" means polyethylene glycol having an average molecular weight of 600.

5 "G" means Gelled

6 "D" means did not invert

## EXAMPLE V

### Inversion Emulsion Stability Testing Emulsion Containing an Anionic Polymers

Employing the procedure of Example II, several emulsions containing an anionic copolymer containing 92 mole % of acrylamide and 8 mole percent of acrylic acid were prepared. The thermal stability of each emulsion was evaluated using the procedure of Example IV. The results of the evaluations are set forth in the following Table II.

### Table II

Results of The Evaluation of Emulsion of this Invention
Anionic Polymer

| | | Emulsion | | | Thermal Stability | | |
|---|---|---|---|---|---|---|---|
| | | Inverting Detergent System | | | | | |
| Emulson No. | Wgt % Polymer | Wgt % Polyethylene Glycol | Wgt% Triton N-101 | Wgt % System | Days | ml of Oil | ml of Cream |
| 1 | 31.21 | 10 PEG 200 | 90 | 0.79 | 33 | 0 | 1 1/2 |
| 2 | 31.21 | 10 PEG 200 | 90 | 0.79 | 33 | trace | 1 1/4 |
| 3 | 31.08 | 0 | 100 | 1.18 | G | G | G |
| 4 | 31.08 | 0 | 100 | 1.18 | G | G | G |
| 5 | 27.8 | 0 | 100 | 1.40 | 33 | 1/4 | 3/4 |
| 6 | 28.01 | 10 PEG 200 | 90 | 0.70 | 33 | 1/4 | 1/2 |

## EXAMPLE VI

### Inversion Emulsion Stability Testing Emulsion a Containing Cationic Polymer

Employing the procedure of Example III several emulsions containing the cationic copolymer of acrylamide and dimethylaminoethylmethacrylate methyl chloride ammonium salt were prepared. These copolymers contained 10,2 and 5 mole percent of the cationic moiety. The thermal stability of each emulsion was evaluated using the procedure of Example IV. The results of the evaluations are set in the following Table III.

## TABLE III

### Results of The Evaluation of Emulsion Containing Cationic Polymer

| | | Emulsion | | | | Thermal Stability | | |
| | | Inverting Detergent System | | | | | | |
| Emul-sion No | Polymer | Wgt % Cationic Moiety | Wgt % PEG 300 | Wgt % Triton N-101 | Wgt % System | Days | ml of oil | ml of cream |
|---|---|---|---|---|---|---|---|---|
| 1 | 30.74 | 10 | 0 | 10 | 1.1 | 29 | 1/4 | 3/4 |
| 2 | 30.74 | 10 | 10 | 90 | 1.1 | 29 | 1/4 | 1/2 |
| 3 | 30.12 | 2 | 0 | 100 | 1.24 | 34 | 1/4 | 3/4 |
| 4 | 30.12 | 2 | 10 | 90 | 0.83 | 34 | 1/2 | 1/4 |
| 5 | 31.33 | 5 | 0 | 100 | 1.22 | 34 | trace | trace |
| 6 | 31.45 | 5 | 10 | 90 | 0.82 | 34 | 3/4 | $\frac{1}{2}$ ml |

WHAT IS CLAIMED IS:

1. An improved water-in-oil emulsion of the type which contains from 5 to 90 weight percent of finely divided water soluble vinyl addition polymer and one or more water soluble water-in-oil emulsifying agents, and a hydrocarbon liquid, said emulsion containing one or more inverting surfactants capable of inverting said emulsion on addition to water whereby the water-soluble vinyl addition polymer is released into the water as a solution, said improvement comprising a surfactant system which comprises a mixture of one or more water-soluble polyethylene glycols and one or more compatible surfactants.

2. An improved water-in-oil emulsion according to claim 1 wherein said surfactants are selected from the group consisting of cationic, anionic and non-ionic surfactants.

3. An improved water-in-oil emulsion according to claim 1 wherein said polyethylene glycols have an average molecular weight of from 100 to 6000.

4. An improved water-in-oil emulsion according to claim 4 wherein said average molecular weight is from 200 to 2000.

5. An improved water-in-oil emulsion according to claim 5 wherein said average molecular weight is from 200 to 600.

6. An improved water-in-oil emulsion according to claim 1 wherein said surfactants are selected from the group consisting of ethoxylated nonyl phenol, ethoxylated nonyl phenol formaldehyde resins, dioctyl esters of sodium sulfosuccinate and octyl phenol polyethoxy ethanol.

7. An improved water-in-oil emulsion according to claim 6 wherein said surfactants are selected from the group consisting of ethoxylated nonyl phenols.

8. An improved water-in-oil emulsion according to claim 1 which contains from 0.2 to 5 weight percent of the emulsion of a surfactant system comprising from 5 to 75 weight percent by weight of one or more polyethylene glycols by weight of said system and from 25 to 95 weight percent of said one or more compatible surfactants by weight of the system.

9. A method of rapidly dissolving water-soluble vinyl addition polymers in water which comprises inverting the emulsion according to claim 1 by adding it to water.

10. A method of rapidly dissolving water-soluble vinyl addition polymers in water which comprises:

(a) preparing a water-in-oil emulsion which contains dispersed therein a finely divided water-soluble vinyl addition polymer a hydrophobic oil and one or more emulsifying agents; and

(b) inverting said polymer-containing emulsion by adding it to water which contains a surfactant system comprising a mixture of one or more water-soluble polyethylene glycols and one or more water soluble surfactants, whereby the water soluble vinyl addition polymer is released into the water as a solution.